# EUROPEAN PATENT APPLICATION

(11) **EP 1 032 224 A2**
(43) Date of publication of application: **30.08.2000**
(21) Application number: 00301375.2
(22) Date of filing: 22.02.2000
(51) Int. Cl.: H04Q 7/24

(54) **Method and apparatus for providing quasi mobile telephone service**

(30) Priority: 22.02.1999 US 120925 P
(71) Applicant: Selex Communications LLC., Atlanta, Georgia 30324 (US)
(72) Inventor: Roach, Peter O., Jr., Atlanta, Georgia 30319 (US)
(74) Representative: Orchard, Oliver John

(57) **Abstract**

A telephone system and method allowing a user to set up landline calls using a mobile telephone. A user initiates outgoing calls by inputting into the mobile phone the phone numbers of a remote phone of a called party and a local landline phone convenient for use by the user. A message containing these phone numbers is sent by the mobile telephone to a remote telephone call origination platform, which establishes a bridging connection between the remote phone and the local phone. An incoming call is received by signaling the user of an incoming call on the mobile phone. The user inputs the number of a convenient landline phone into the mobile phone, which in turn signals the remote telephone call origination platform to forward the incoming call to the designated landline phone. The system and method are adaptable to PBX systems. Advantages of both mobile and landline phones are combined, and calling card-like billing/charging can be provided without the inconvenience of inputting calling card numbers and identification codes.

## Description

The present invention relates generally to telephone systems and related telephone service methods and apparatus, and in particular it relates to a system and method combining features and advantages of mobile telephone, landline telephone, and calling card telephone systems and methods.

Currently, in many areas of the world there is limited competition in local, long distance, and international long distance telephone services. This limited competition may be due to several causes, such as regulatory constraints, exclusive concessions of the public switched telephone networks, and the high cost of service in a widely dispersed population in some locations, etc. In most instances, limited competition causes the local, long distance, and/or international long distance rates to the subscriber to be substantially higher than exist in competitive markets.

In a number of these areas around the world, there exists a local cellular carrier that competes with the local (landline) service provider. Oftentimes, these cellular carriers compete for a higher tier service (customers who can pay a higher cost) by providing mobility to the customer. Many of these cellular carriers desire to offer a service to lower tier customers- (customers with rather limited financial means). However, the higher cost of the infrastructure for cellular carriers and/or the restricted capacity of voice channels on cellular networks limit the ability of the cellular carriers effectively to reach these lower tier customers.

In the past, cellular carriers have attempted several methods to reach this lower tier customer group. Cellular carriers have used for example, pricing packages that offer free air time during off-peak hours, pre-paid services, or restricted use packages (e.g. no roaming, inbound calling only, etc.) Most of these promotional techniques have met with limited success in attracting the lower tier customer groups. This is mainly due to the limited functionality of these cellular service packages as well as the continued high cost of the infrastructure required to offer such services. Thus, it has been found that a need exists for improved systems and methods of providing a telephone service combining the lower rates typical of a landline service with the mobility of a cellular service.

In addition, it has been found that many mobile cellular telephone users prefer to use a standard landline telephone when available, rather than a mobile phone. This preference can be due to the actual or the perceived differences in connection quality or service reliability, lower cost, or certain additional features provided by a landline service as compared to a mobile service. Also, many users prefer to use a landline service provided through a private branch exchange ("PBX") system or switchboard, when available. Because many users store frequently called telephone numbers in the memory of their mobile phones, however, it would be desirable to permit a user to utilize the automatic dialing features and stored number menus of their mobile phone when placing a call over a landline phone.

Many users also find it desirable to place calls utilizing a calling card, which may be a prepaid calling card or a periodically billed calling card. These calling cards permit users to take advantage of more favorable rates and/or consolidated billing for calls originated from different mobile and/or landline telephones. The use of a calling card, however, is often inconvenient as the user typically must input a calling card number and a personal identification number ("PIN") when placing a call for billing, identification and fraud-prevention purposes. Many times, a calling card user must also dial a service provider access number to originate a calling card call. It would be desirable to provide a system and method enabling users to obtain the benefits of calling card calling without suffering the disadvantages and inconveniences typically related thereto.

Accordingly, it can be seen that a need yet remains for a method and apparatus for providing a telephone service that is similar or in some ways comparable to a mobile telephone service, but which can be provided at a substantially lower cost. There is also a need for a system and method permitting a user to utilize memory and other features of a mobile phone to set up a landline call. In addition, a need remains for a system and method for providing calling card-like features without a number of the inconveniences typically found to result from the use of a calling card. It is to the provision of a method, system and associated apparatus meeting these and other needs that the present invention is primarily directed.

Briefly described, in a first preferred form a method illustrative of the present invention includes providing quasi-mobile telephone service using a mobile telephone, a data network, and a Remote Telephone Call Origination ("RTCO") platform. The mobile telephone is of the type which is capable of communicating with the data network. The method includes the steps of using the mobile telephone to dial a first telephone number and a second telephone number. The first and second telephone numbers are captured by the mobile telephone and are transmitted in a data message to a data network. The data message is relayed from the data network to the RTCO platform. The RTCO platform places a first call from the RTCO platform to the first telephone number. RTCO platform also places a second call from the RTCO platform to the second telephone number in a manner to connect the first and second calls to each other.

Preferably, the mobile telephone uses short messaging for communicating with the data network.

Stated another way, preferably a cellular telephone is modified and is specially programmed to allow the user to specify not only the call (destination) telephone number (the first telephone number), but also the calling (origination) telephone number of a convenient, nearby landline phone. The mobile telephone is programmed to originate a short message containing the calling number and the called number. This short message is transmitted to a platform that is programmed to originate a call to the calling telephone number (such as a nearby landline phone) that was specified by the user. The platform is programmed to originate another call to the called telephone number specified by the subscriber. The platform is programmed to connect (bridge) the two calls together in order to allow the call to be completed. This allows the user to use the cellular telephone to setup and initiate a call, and then to use a standard (lower cost) landline telephone to actually complete the voice path of the call.

In another aspect, a system illustrative of the present invention includes means for providing communication between a local device and a remote device. The system preferably includes an initiating device for receiving an input identifier of the remote device, and means for communicating a message containing the identifier of the remote device to a telecommunications network. The system preferably also includes remote telephone call origination means for receiving the message containing the identifier of the remote device from a telecommunications network, and for effecting a bridging connection between the local device and the remote device.

In a further arrangement illustrative of the present invention includes a system for providing communication between a remote device and a local device includes remote telephone call origination means for receiving an incoming call from the remote device over a telecommunications network and for communicating a message to announce the incoming call to an initiating device. The initiating device preferably includes means for inputting an identifier of the local device and communicating a message containing the identifier of the local device to the remote telephone call origination means. The remote telephone call origination means preferably receives the message containing the identifier of the local device and effects a bridging connection between the local device and the remote device.

Yet another method of establishing communication between a local device and a remote device to be described below, by way of example in illustration of the present invention, includes inputting an identifier of the remote device into an initiating device, communicating a message containing the identifier of the remote device via a telecommunications network to a remote telephone call origination means, and effecting a bridging connection between the local device and the remote device.

A further method for providing communication between a remote device and a local device to be described below by way of example in illustration of the present invention, includes receiving an incoming call from the remote device, via a telecommunications network, into a remote telephone call origination means. The method preferably also includes communicating a message to announce the incoming call to an initiating device, inputting into the initiating device an identifier of the local device, and communicating a message containing the identifier of the local device to the remote telephone call origination means, whereby a bridging connection can be effected between the local device and the remote device.

Yet a further illustrative method includes charging for the cost of a telephone call. The method preferably includes initiating a telephone call between a local device and a remote device using an initiating device, communicating a message containing information identifying the initiating device to a communications network, effecting a bridging connection between the local device and the remote device, and collecting billing information regarding the telephone call and charging at least a portion of the cost of the communication to an account associated with the initiating device.

By allowing the user to setup and initiate the call using a cellular network and actually to complete the call using a standard Public Switch Telephone Network ("PSTN), the user can have the benefits of both technologies. It provides the user with substantial mobility similar to a cellular service, while allowing the user to enjoy the lower cost and dependable voice transmission over the public switch telephone network.

A system and a method to be described below, by way of example in illustration of the present invention also advantageously enables a user to utilize the automatic calling menus, memory-stored telephone number registers and other features of their cellular mobile phones when placing (and/or receiving) calls over a landline phone, including a PBX or switchboard connected landline phone. For example, the user can remotely originate a landline telephone connection using their mobile phone, taking advantage of any automatic calling menus, memory-stored telephone number registers or other features available through the mobile phone.

The illustrative system and method to be described can also function as a "Virtual Calling Card," whereby the user obtains many benefits typically associated with a standard calling card without suffering many of the typical disadvantages and inconveniences of a calling card. Because the landline connection is remotely originated though a cellular mobile phone, the caller's identity can be automatically validated through the carriers home location register ("HLR") prior to completing the landline connection. This eliminates the need for the caller to input a calling card number and PIN with every call. The user can establish service with one or more carriers of their choice to obtain the rate structure and service plan best suited to their needs. The user's calls can be billed to the customer in a single statement, regardless of the point of connection.

A system and method to be described below by way of example in illustration of the present invention is able to eliminate the need for the carrier to maintain a dedicated toll-free access network to offer "calling card" type services. The carrier can also select the most cost-effective location worldwide to originate telephone calls. As a result, carriers can pass their savings on to users in the form of lower rates, and/or can increase profit margins. In addition, an arrangement illustrative of the present invention allows cellular carriers to obtain revenue from landline calling.

In use, a user may take advantage of the illustrative method and apparatus by keeping his mobile telephone with him as he moves from place to place. When the user wants to place a call from his current location, he would find a convenient, nearby landline telephone and determine its telephone number. The user would then dial the destination telephone number and the nearby landline telephone number into the mobile telephone. The mobile telephone would then transmit this information in a message and ultimately the RTCO platform would call both the destination telephone number and the convenient, nearby landline telephone and connect the two calls together. In this way, the user could use a nearby landline telephone to complete a call, and have the charges routed to his own personal account, even though the landline telephone is not his telephone. For example, the landline telephone may be a public pay phone, a hotel phone, or another person's phone. In addition to allowing a user to move about and use whatever telephone is nearby and convenient, this method and apparatus allows multiple users to share a single landline telephone and each user to have his or her own account for charging or billing purposes. For example, migrant workers who are living temporarily in migrant housing could use an available "house" landline telephone and share the telephone, with each migrant worker having his or her own phone account. This would allow a large number of people to effectively share a telephone. Moreover, as the migrant worker would move from one job location to another, they would still have continuous, uninterrupted telephone service by virtue of the quasi-mobile service provided herein.

The present arrangement is also useful for receiving an incoming telephone call, whereby an incoming telephone call is re-routed from the user's mobile telephone to instead be directed to a nearby landline telephone. The cellular telephone is modified to be specially programmed to allow the phone to receive a data message (such as the standard ring command for cellular telephones) to indicate that there is an inbound call being attempted. The mobile telephone would then prompt the user to key in (input) the desired destination telephone number of a convenient, nearby landline phone. The mobile telephone would then put together a data message and communicate it (such as by using the short message service ("SMS") capabilities of the global system for mobile communications ("GSM") network) containing at least a destination telephone number of the nearby landline telephone that the user desires to receive the incoming telephone call with and identifying the called number. The data message is then routed to a platform that would receive the incoming call and the outbound call to the mobile telephone. The platform would be programmed to bridge these calls together to form a complete conversation.

While the present arrangement preferably uses a data network to relay messages from the mobile telephone to the RTCO platform, those skilled in the art will recognize that it is possible to have the mobile telephone communicate directly with the RTCO platform. Moreover, while a mobile telephone is preferred for initiating and rerouting calls (largely because of the widespread availability and low cost of such devices), those skilled in the art will also recognize that other devices could be employed to initiate and reroute calls. U.S. Patent No. 5,546,4 44 of Roach, et al, which is hereby incorporated herein by reference, discloses a way in which a control channel of a cellular mobile telephone can be used communicate data.

The following description and drawings disclose, by means of an example, the invention which is characterised in the appended claims, whose terms determine the extent of the protection conferred hereby.

In the drawings:-
Fig. 1 is a schematic illustration depicting a method and system for providing quasi-mobile telephone service according to a preferred form of the present invention, and specifically depicting the remote origination of telephone calls thereby,
Fig. 2 is a flow chart depicting the origination of telephone calls using the method and system described above,
Fig. 3 is a schematic illustration of a method and system for providing quasi- mobile telephone service according to a preferred form of the present invention, and specifically depicting termination of an incoming telephone call,
Fig. 4 is a flow chart depicting the termination of telephone calls using the method and system described above,
Fig. 5 is a schematic illustration of a method and system, according to a preferred form of the present invention, for establishing a telephone connection between a calling phone connected to a PBX or switchboard and a called phone, using a mobile phone to establish the connection, and
Fig. 6 is a schematic illustration of a method and system, according to another preferred form of the present invention, for providing calling card-like calling features when placing a call between a calling phone and a called phone using a mobile phone to establish the connection.

Referring now to the drawing figures, in which like reference numerals represent like parts throughout, the present arrangement includes a method and system 10 for providing quasi-mobile telephone service, using an initiating device 12 to establish a connection between a local device 14 and a remote device 16. The system of the present arrangement preferably includes one or more computers and associated software for controlling the operation and switching according to the manner described herein. The associated software can be programmed into the memory of the computer or can be stored in a computer-readable medium according to known techniques. The method and system 10 preferably combine many of the advantages typical of one or the other of mobile or landline telephone service, while eliminating many of the disadvantages of each. Particular embodiments and applications of the method and system of the present invention are described in greater detail below. Although the present arrangement is described herein primarily with reference to examples directed to voice transmission applications conducted between telephones, it will be understood that the present arrangement is equally applicable to data transmission applications conducted between data transmission devices such as, for example, fax machines, computer modems, or the like.

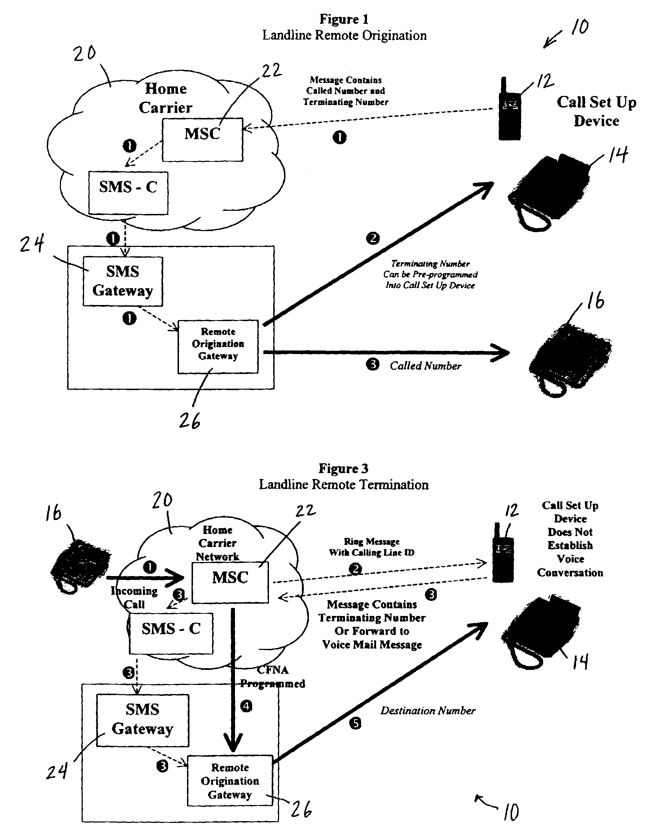

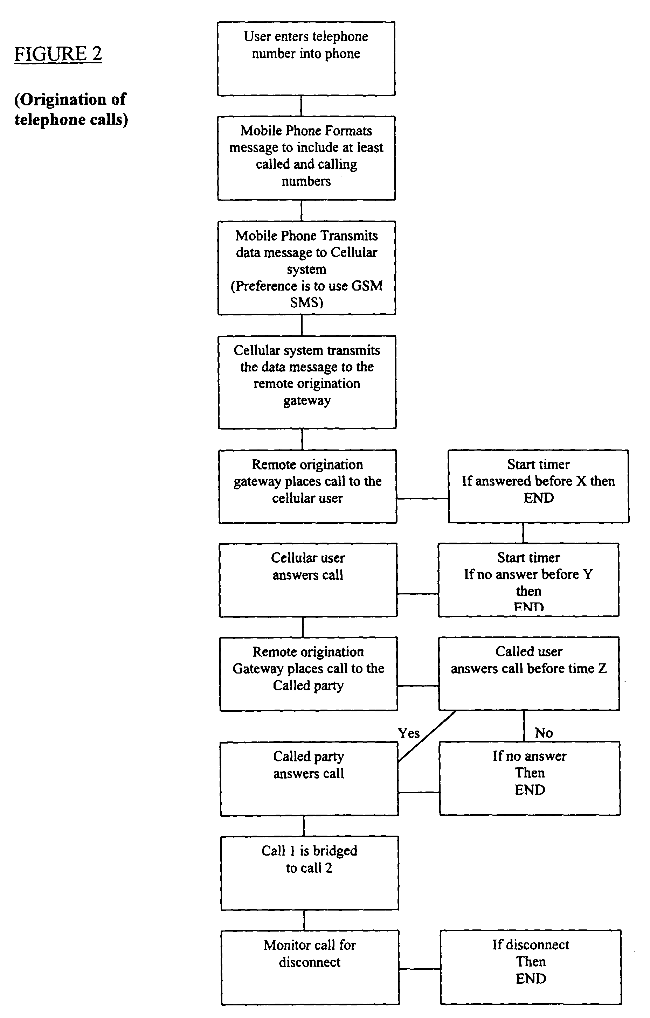

In a preferred form of the present arrangement, described with particular reference to Figs. 1 and 2, a user (in this instance, the "calling party") utilizes a portable call initiating device 12 to establish a connection between a local (i.e., accessible for use by the caller) device 14 and a remote device 16. In preferred arrangements, the call initiating device 12 includes a mobile cellular telephone or another device capable of receiving and sending signals to and from a remote location, the local device 14 includes a local PSTN landline telephone in the vicinity of the calling party, and the remote device 16 includes a landline or mobile telephone available to a remote party (in this instance, the "called party"). To initiate an outgoing call using the method and system of the present arrangement, the calling party (or a third party initiating the call) preferably enters the telephone number or other unique identifier of the remote phone 16 on the mobile phone 12, as by using the mobile phone's keypad or a menu of phone numbers stored in the mobile phone's memory. The telephone number or other unique identifier of the local phone 14 is optionally entered by the calling party into the mobile phone 12, or can be stored in the memory of the mobile phone for automatic transmission upon initiation of a call. Alternatively, a default local phone number can be associated with the calling party on the calling party's home carrier network, the remote origination gateway, or elsewhere in the system. If a default local phone number is provided, the system can be configured to allow the calling party to override the default by inputting an override local phone number, or alternatively can require that all calls be conducted from the default local phone for security or other reasons. The mobile phone 12 formats a message including data identifying the remote number and optionally the local number, and transmits the message according to a standard electronic data communication protocol to an existing telecommunications network, such as a cellular telephone network. The message can be directly transmitted to the calling party's home cellular carrier network 20 or indirectly transmitted via a visited cellular carrier through one or more mobile switching centers ("MSC5") 22. The message preferably is transmitted over the network 20 using GSM SMS messaging. In a preferred form, the message is transmitted from the carrier network 20, preferably via an SMS gateway 24, to a remote origination gateway 26 including the RTCO platform. An SS7 message box is preferably provided, and the gateway is capable of originating voice and/or data telephone calls. The remote origination gateway 26 places a call to the local phone 14. A timer can be utilized to terminate the connection if the local phone 14 is not answered within a predetermined time interval, or if the local phone is busy. The calling party preferably answers the local phone 14, establishing a connection with the remote origination gateway 26. Upon completion of the connection with the local phone, the mobile phone can be disconnected automatically or manually by the calling party. The remote origination gateway 26 also places a call to the remote phone 16, simultaneously with or sequentially before or after the call is placed to the local phone 14. A timer can be utilized to terminate the connection if the remote phone 16 is not answered within a predetermined time interval. The called party preferably answers the remote phone 16, establishing a connection with the remote origination gateway 26. Upon connection with both the local phone 14 and the remote phone 16, the remote origination gateway 26 establishes a bridging connection between the local phone 14 and the remote phone 16, permitting voice or data transmission therebetween. The remote origination gateway 26 preferably monitors the call for disconnect at either the local phone 14 or the remote phone 16, and thereupon terminates the call. The system 10 can be configured for billing purposes to allocate all or a portion of the cost of the call to the account(s) of one or more of the initiating device 12, the local device 14, the remote device 16, and/or one or more third-party payers. According to optional and further preferred arrangements, the remote origination gateway 26 can be configured for conference calling. For example, users of one or more of the initiating device 12, the local device 14, and/or the remote device 16 can input the telephone number(s) or other unique identifiers of one or more additional parties to be conferenced in with the calling party and the called party.

Additionally or alternatively, one or more additional parties can call in to the remote origination gateway 26 to be conferenced in with the calling party and the called party.

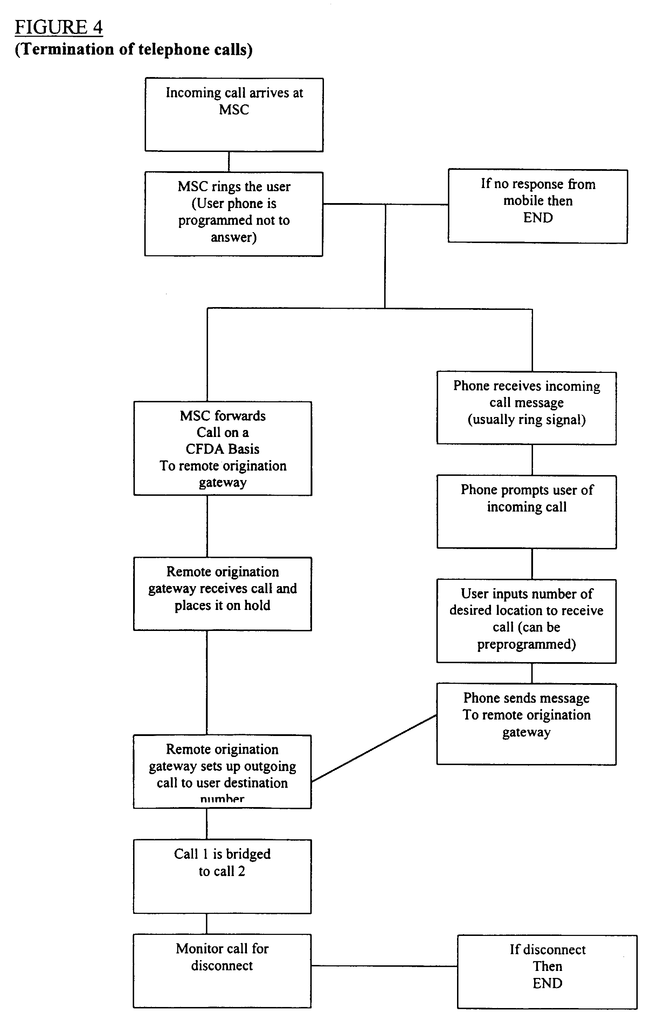

Referring now with particular reference to Figs. 3 and 4, the method and system 10 of the present arrangement can be seen also to enable the connection of an incoming call from a remote party at a remote phone or other remote device 16' (in this instance, the "calling party") to a user (in this instance, the "called party") at the local phone or other local device 14, via the user's mobile phone or other initiating device 12. An incoming call from the remote phone 16', directed to a telephone number or other unique identifier associated with the mobile phone 12 via an existing telecommunications network, is received at the mobile switching center (MSC) 22 of the user's home cellular carrier network 20. The MSC preferably forwards the incoming call to the remote origination gateway 26 on a "call forwarding-don't answer" ("CFDA") basis, connecting the remote phone 16 with the remote origination gateway 26. The remote origination gateway 26 preferably receives the incoming call and places the calling party on hold pending connection with the local phone 14. Live or recorded music or other entertainment, informational messages, advertising or other audible material can be broadcast to the parties while on hold. Simultaneously with or sequentially before or after forwarding the incoming call to the remote origination gateway 26, the MSC announces the call to the called party via the mobile phone 12, typically by means of a ring or other audible, tactile or visual signal, according to standard telecommunications protocol. Preferably, the mobile phone is configured to prevent the user from answering the call on the mobile phone, or is switchable to selectively permit or prevent answering calls on the mobile phone. A timer can be provided to terminate the call if the called party does not respond within a predetermined interval of time. Preferably, the called party acknowledges the incoming call signal and inputs the telephone number or other unique identifier of the local phone 14 to be used for receiving the incoming call, as by using the mobile phone's keypad or the menu of phone numbers stored in the mobile phone's memory. The mobile phone 12 transmits a message containing the local telephone number to be used for receiving the incoming call to the MSC, which signals the remote origination gateway 26 via the SMS gateway to place a call to the local phone 14. Alternatively, a default local phone number associated with the called party is transmitted to the MSC, which signals the remote origination gateway 26 to place a call to a default local phone 14. As discussed above, the default local phone number can be mandatory or subject to override. The called party then answers the local phone 14 to complete the connection between the local phone and the remote origination gateway 26. Upon connection between the local phone 14 and the remote origination gateway 26, the mobile phone 12 can be automatically or manually disconnected. The remote origination gateway 26 then establishes a bridging connection between the local phone 14 and the remote phone 16, permitting voice or data transmission therebetween. The remote origination gateway 26 preferably then monitors the call for disconnect at either the local phone 14 or the remote phone 16, and thereupon terminates the call. As described above, the system 10 optionally can be configured for conference calling with additional parties.

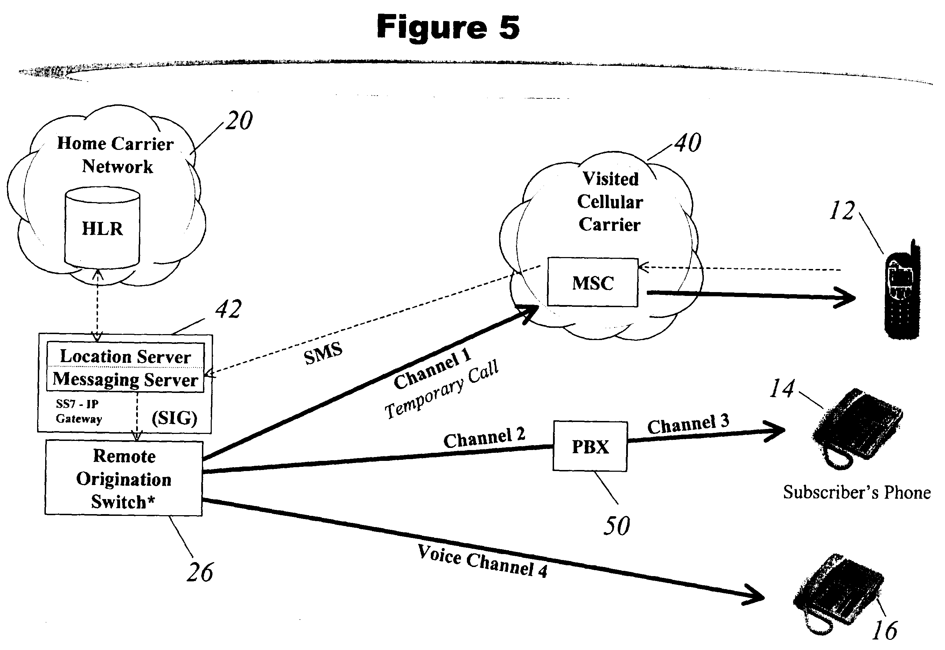

Figure 5 shows another arrangement illustrative of the present invention, wherein the local phone 14 is part of a PBX or other switchboard type of network 50. Preferably, the system, method and components of this arrangement are substantially as described above, with certain specific additions or modifications that will now be described. The user (in this instance, the "calling party") preferably initiates an outgoing call to a remote user (in this instance, the "called party") using the mobile cellular phone 12. A short message containing information regarding the telephone number of the remote phone 16 and the PBX switchboard 50 containing the user's local phone 14 is transmitted from the mobile phone 12 over a cellular communications network to a location server/messaging server 42. The location server/messaging server 42 communicates with the user's home carrier network 20 and the remote origination switch 26 substantially in the manner described above. The remote origination switch 26 places calls to the remote phone 16 and the PBX switchboard 50 substantially in the manner described above. In addition, the remote origination switch 26 places a temporary call to the mobile phone 12. A temporary bridging connection is established between the mobile phone 12 and the PBX switchboard 50, permitting the user to communicate with the PBX 50, via the mobile phone 12, to connect the call through the PBX to the local phone 14. This connection can be accomplished, for example, by keying in the PBX extension number of the local phone 14 on the keypad of the mobile phone 12 in the case of an automated switchboard; or alternatively, can be accomplished by voice in the case of an operator-answered switchboard. Upon connection of the local phone 14 to the remote origination switch 26, the temporary call from the remote origination switch to the mobile phone 12 is manually or automatically disconnected. The remote origination switch 26 then completes the bridging connection between the local phone 14 and the remote phone 16 substantially in the manner described above.

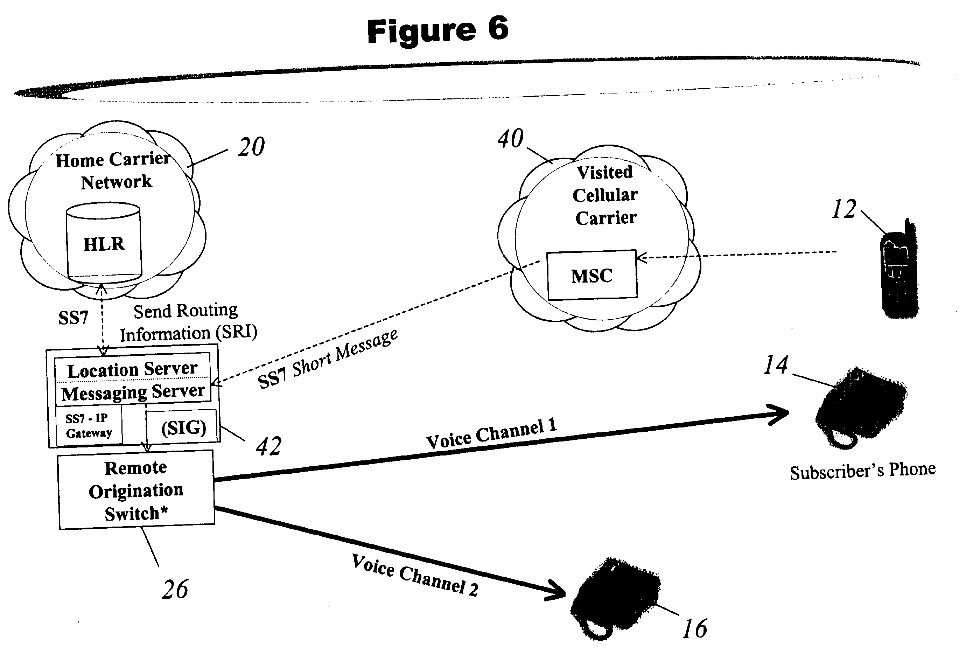

Figure 6 shows another preferred embodiment of the method and system of the present invention that is particularly adapted to provide telecommunication services having characteristics in the nature of an enhanced calling card. The user (in this instance, the "calling party") preferably initiates an outgoing call to a remote user (in this instance, the "called party") using the memory menu of the mobile cellular phone 12. A short message containing information regarding the telephone number of the remote phone 16 and the user's local phone 14 is transmitted from the mobile phone 12 over a cellular communications network, via a mobile switching center of a visited cellular carrier 40, to a location server/messaging server 42. In a preferred form, the location server/messaging server 42 includes an SS7-IP gateway. The SS7-IP gateway converts an SS7 message to Internet protocol, and preferably carries out any necessary logic operations. Alternatively, logic operations can be completed on an SS7 box. The user's home carrier network 20 communicates with the location server/messaging server 42 to send routing information and user authorization, and to collect information for billing or charging the call to a prepaid service package. The home location register (HLR) of the home carrier network 20 validates the identity of the calling party according to standard cellular telecommunications fraud-prevention protocol, eliminating the need for the user to key in a calling card number and PIN for every call. In addition, because the call is set up using the existing cellular communications network, the need for a dedicated toll-free access network is eliminated. The location server/messaging server 42 communicates with the remote origination switch 26, which places calls to the local phone 14 and the remote phone 16, and completes the bridging connection between the local phone 14 and the remote phone 16 substantially in the manner described above.

A number of advantages and increased efficiencies are obtained by the arrangements described in illustration of the present invention. Billing information collected by the user's home carrier network 20 permits the user to be billed for all calls on a single statement, or permits all calls to be charged to a prepaid service plan, regardless of the locations of the one or more local phones 14 used to complete the calls, in much the same manner as is permitted with calling card systems. Because the connection between the local phone 14 and the remote phone 16 is maintained by the bridging connection provided by the remote origination switch 26, the system and method presently described permit a cellular carrier to obtain revenue from what would otherwise be a non-revenue generating, wholly landline connection. Consumers, however, can benefit from rates lower than standard calling card rates for landline connections, as the cellular carrier can route calls and manage billing more efficiently using the method and system described than is the case with standard landline connections using calling cards. In addition, consumers benefit from increased convenience, as the present arrangement enables landline calls to be initiated using calling information stored in the memory registers of a mobile phone, and obviates the need for remembering and dialing access numbers, calling card numbers and PINs. The system and method of the present arrangement also, advantageously, are not reliant on the touch tone quality of the local phone. Some hotels, for example, modify the touch tone signals of room phones to prevent users from using calling cards and thereby require them to pay the hotel's rates for phone connections. The present invention allows the call to be initiated using a mobile phone, bypassing any effect of altered touch tone quality of a local phone within a hotel's PBX network.

In optional and further arrangements, the system 10 includes voice mail messaging means, whereby an incoming call is directed to a recording device for recording a message from the calling party for later playback by the called party. The voice mail messaging means is preferably automatically activated in the event that the mobile phone 12 or the local phone 14 are in use at the time of the incoming call. The voice mail messaging means can preferably be selectively activated by the called party by signaling the MSC, via the mobile phone 12, to forward the call to voice mail upon receiving an incoming call signal. The system 10 optionally also includes caller ID means for identifying the calling party to the called party upon signaling an incoming call on the mobile phone 12, permitting the called party to screen incoming calls.

One unique application of the present arrangement is the enablement and implementation of a region-wide prepaid service providing significant advantages over existing calling-card systems or prepaid service plans. Since both incoming and outgoing calls are routed through the remote origination platform, a cellular carrier can provide a prepaid service (local, long distance and international long distance) on a region-wide or worldwide basis, This is a significant improvement over the standard prepaid service offered by cellular carriers in that it can be extended beyond the subscriber's local service coverage area. Moreover, with this arrangement a cellular carrier can prohibit or selectively restrict the use of the cellular voice channels. The carrier can restrict the usage on a time of day basis, originating network basis (restrict roaming capabilities or home zone only capabilities), the input of an access code, etc. The restriction of voice channel dapabilities can be remotely programmed using a data channel such as the short message service channel. In this arrangement, the mobile phone or other initiating device 12 functions solely as a control device for the system 10. This capability can be provided on a specially made device or on a standard cellular phone modified with special programming, such as a GSM phone using a subscriber identification module ("SIM") toolkit. The method and system of the present arrangement advantageously utilize the home location register (HLR) database, or other pre-existing user verification system of a cellular carrier to identify the mobile telephone or other initiating device from which the incoming call to the cellular network is being placed. By identifying the calling party upon receiving an incoming call to the network in this manner, the carrier can confirm that the calling party is an authorized user, collect information for billing and charging purposes, control the terms of connection, and conduct a variety of other operations. For example, the carrier can limit the duration of calls, specify authorized call destinations, limit the time periods during which calls can be placed, specify the types of calls (e.g., voice, data), etc.

The call set-up time for this quasi-mobile service may be slightly longer than standard call set-up times using existing wireless networks. This extra time will most likely result from the necessity of requesting and receiving user input to complete the conversation. A cellular carrier may desire to offer voice announcements during a call set-up. These announcements can be provided either to the originating party or the terminating party during the call set-up.

Once the phone conversation is established through the remote origination gateway (RTCO) it is possible to provide other features through the cellular telephone. These features optionally include advanced call conferencing, call forwarding, special announcements, or any other telephony features. For mobile originated calls it is possible for the cellular carrier to populate the calling line ID field, from the remote gateway, with the telephone number of the users mobile telephone (i.e., the initiating device 12), the user's home telephone number, or another designated telephone number or identification field, regardless of the location and telephone number of the local phone 14 that is the actual destination of the telephone call used by the calling party to complete the call. This will allow the called party to receive the calling line ID of the calling party, and will allow the calling party to have the appearance of maintaining a consistent telephone number regardless of their location and regardless of the telephone number of the local phone actually used by the calling party. Optionally, the calling line ID of the calling party can be transmitted from the remote gateway to the calling party's local phone 14, as well as the remote phone 16, in order to identify the incoming call to the calling party for call screening purposes.

While the present invention has been described with reference to various preferred arrangements by way of example, it will be readily apparent to those of ordinary skill in the art that many additions, deletions and modifications can be made thereto, and other arrangements conceived without departing from the scope of the protection sought for the invention as defined in the claims which follow.

## Claims

1. A method of providing a quasi-mobile telephone service using an RTCO platform, a data network, and a mobile telephone of the type capable of communicating with the data network, the method including the steps of:
using the mobile telephone to dial a first telephone number and a second telephone number;
capturing the first telephone number and a second telephone number;
transmitting a data message to the data network, with the data message including the first and second telephone numbers;
relaying the data message from the data network to the RTCO platform;
placing a first call from the RTCO platform to the first telephone number; and
placing a second call from the RTCO platform to the second telephone number in a manner to connect the first and second calls to each other.

2. A method as claimed in claim 1 wherein the mobile telephone uses short messaging for communicating with the data network.

3. A method as claimed in claim 1 wherein the mobile telephone is used to reroute incoming calls to another telephone by detecting that an incoming call is being placed to the mobile telephone and sending a message to the RTCO platform to redirect the incoming call to the other telephone.

4. A method as claimed in claim 1 wherein the data network identifies the mobile telephone through a home location register.

5. A method as claimed in claim 1 wherein the data network transmits caller identification information to at least one of the first and second telephone numbers.

6. A method of providing a quasi-mobile telephone service using an RTCO platform and a mobile telephone, the method including the steps of:
using the mobile telephone to dial a first telephone number and a second telephone number;
capturing the first telephone number and a second telephone number;
transmitting a data message to the RTCO platform, with the data message including the first and second telephone numbers;
placing a first call from the RTCO platform to the first telephone number; and
placing a second call from the RTCO platform to the second telephone number in a manner to connect the first and second calls to each other.

7. A method as claimed in claim 6 wherein the RTCO platform identifies the mobile telephone through a home location register.

8. A method as claimed in claim 6 wherein the RTCO platform transmits caller identification information to at least one of the first and second telephone numbers.

9. A system for providing communication between a local device and a remote device, the system including:
an initiating device for receiving an input identifier of the remote device, and communicating a message containing the identifier of the remote device to a telecommunications network;
remote telephone call origination means for receiving the message containing the identifier of the remote device from a telecommunications network, and for effecting a bridging connection between the local device and the remote device.

10. A system as claimed in claim 9, wherein the initiating device includes a mobile telephone.

11. A system as claimed in claim 10, wherein the local device includes a landline telephone.

12. A system as claimed in claim 9, wherein the initiating device receives input identifiers of the local device and the remote device and communicates a message containing both identifiers to the telecommunications network, and wherein the remote telephone call origination means receives the message containing both identifiers and effects the bridging connection by calling the local device and the remote device.

13. A system as claimed in claim 12, wherein the telecommunications network identifies the initiating device through a home location register.

14. A system as claimed in claim 12 wherein the telecommunications network transmits caller identification information to at least one of the local and remote devices.

15. A system as claimed in claim 9, wherein the remote telephone call origination means effects connection of at least one additional device with the local device and the remote device for conference communications.

16. A system as claimed in claim 9, further including means for charging at least a portion of the cost of the communication to an account associated with the initiating device.

17. A system as claimed in claim 16, wherein the means for charging at least a portion of the cost of the communication to an account associated with the initiating device includes means for identifying the initiating device without the need for inputting identification information into the initiating device.

18. A system as claimed in claim 9, wherein the remote telephone call origination means includes a remote origination gateway.

19. A system as claimed in claim 9, wherein the initiating device further includes a signaling device for announcing an incoming call from a remote calling device, and means for communicating a message to the remote telephone call origination means containing an identifier of a local receiving device; and wherein the remote telephone call origination means includes means for effecting a bridging connection between the remote calling device and the local receiving device.

20. A system as claimed in claim 9, wherein the local device is one of a plurality of devices within a network, and wherein the initiating device communicates a message through the remote telephone call origination means to specify the local device and effect the bridging connection.

21. A system for providing communication between a remote device and a local device, the system including remote telephone call origination means for receiving an incoming call from the remote device over a telecommunications network and for communicating a message to announce the incoming call to an initiating device, wherein the initiating device includes means for inputting an identifier of the local device and communicating a message containing the identifier of the local device to the remote telephone call origination means, whereby the remote telephone call origination means receives the message containing the identifier of the local device and initiates a bridging connection between the local device and the remote device.

22. A system as claimed in claim 21, further including voice mail messaging means for recording a message from the remote device if the bridging connection is not completed.

23. A method of establishing communication between a local device and a remote device, the method including:
inputting an identifier of the remote device into an initiating device;
communicating a message containing the identifier of the remote device via a telecommunications network to a remote telephone call origination means; and
effecting a bridging connection between the local device and the remote device.

24. A method as claimed in claim 23, including inputting identifiers of the local device and the remote device into the initiating device, and communicating a message containing both identifiers via the telecommunications network to the remote telephone call origination means.

25. A method as claimed in claim 23, further including connecting at least one additional device with the local device and the remote device, to establish a conference communication.

26. A method as claimed in claim 23, further including collecting billing information regarding the communication and charging at least a portion of the cost of the communication to an account associated with the initiating device.

27. A method as claimed in claim 26, wherein the step of charging at least a portion of the cost of the communication to an account associated with the initiating device includes identifying the initiating device without inputting identification information into the initiating device.

28. A method as claimed in claim 23, further including communicating a message from the initiating device to the remote telephone call origination means to specify the local device among a plurality of devices within a network.

29. A method as claimed in claim 23, further including identifying the initiating device through a home location register of the telecommunications network.

30. A method as claimed in claim 23, further including transmitting caller identification information to at least one of the local and remote devices.

31. A method for providing communication between a remote device and a local device, the method including:
receiving an incoming call from the remote device, via a telecommunications network, into a remote telephone call origination means;
communicating a message to announce the incoming call to an initiating device;
inputting into the initiating device an identifier of the local device; and
communicating a message containing the identifier of the local device to the remote telephone call origination means, whereby a bridging connection can be effected between the local device and the remote device.

32. A method as claimed in claim 31, further including recording a message from the remote device on a recording device if the bridging connection is not effected.

33. A method of charging for the cost of a telephone call including:
initiating a telephone call between a local device and a remote device using an initiating device;
communicating a message containing information identifying the initiating device to a communications network;
effecting a bridging connection between the local device and the remote device; and
collecting billing information regarding the telephone call and charging at least a portion of the cost of the communication to an account associated with the initiating device.

34. A method as claimed in claim 33, including identifying the initiating device via a home location register of the communications network.
